# EUROPEAN PATENT SPECIFICATION

(11) **EP 0 835 952 B1**
(45) Date of publication and mention of the grant of the patent: **05.02.2003**
(21) Application number: 97307932.0
(22) Date of filing: 07.10.1997
(51) Int. Cl.: D01D 4/02, D01D 5/098, D04H 1/56

(54) **Meltblowing method and apparatus**
Vorrichtung und Verfahren zum Schmelzblasen
Dispositif et procédé pour fusion-soufflage

(30) Priority: 18.10.1996 US 717080
(43) Date of publication of application: 15.04.1998
(73) Proprietor: ILLINOIS TOOL WORKS INC., Glenview, Illinois 60025 (US)
(72) Inventor: Kwok, Kui-Chiu, Mundelein, Illinois (US)
(74) Representative: Rackham, Stephen Neil

(56) References cited:
- US-A- 3 888 610
- US-A- 4 380 570
- US-A- 4 785 996
- US-A- 4 826 415
- US-A- 5 407 619

## Description

The invention relates generally to meltblowing processes and to die assemblies for practicing meltblowing processes, and more particularly to die assemblies with a plurality of adhesive dispensing orifices flanked on each . side by air dispensing orifices, wherein adhesive flows from the plurality of adhesive dispensing orifices are drawn stretched and elongated, subsequently referred to as "attenuated" by relatively high velocity, high temperature air flows from the air dispensing orifices to form adhesive , filaments, known for instance, from US-A-4785996.

Meltblowing is a process of forming fibers or filaments by drawing and attenuating a first fluid flow, like molten thermoplastic, with shear forces from an adjacent second fluid flow, like heated air, at high velocity relative to the first fluid flow. These meltblown filaments may be continuous or discontinuous, and range in size between several tenths of a micron and several hundreds of microns depending on the meltblown material and requirements of a particular application. The applications for meltblowing processes include, among others, the formation of non-woven fabrics and the dispensing of meltblown adhesive materials for bonding substrates in the production of a variety of bodily fluid absorbing hygienic articles like disposable diapers and incontinence pads, sanitary napkins, patient underlays, and surgical dressings.

US-A-4,826,415 describes a melt blow die in which a number of capillary tubes are arranged in a common plane contacting each other along adjacent side walls to form an array. The array of tubes is clamped at one end between a pair of die blocks which form a chamber supplying melt of a thermoplastic resin into the capillary tubes. The other ends of the tubes are clamped between parallel lips of gas plates. Gas is blown through orifices formed between the outer surface of each tube and the gas plate lips to draw the melt.

US-A-5,145,689 describes an elongated die assembly including a triangular die tip defined by converging surfaces that form an apex with a plurality of orifices arranged in a series therealong. A continuous air passage formed by air plates disposed along and spaced apart from. the converging surfaces of the die tip directs converging. sheets of high temperature, high velocity air along the converging surfaces of the die tip toward the apex where the high velocity air draws and attenuates polymer flows dispensed from the plurality of orifices. US-A-5,145,689 also discloses an actuatable valve assembly located upstream of the plurality of orifices to selectively control the polymer flow to the orifices in the die tip.

The inventors of the present invention recognize that compressing and heating air required for forming meltblown adhesives and other filaments is an expensive aspect of the meltblowing process. The inventors recognize also that drawing and attenuating fluid dispensed from a series of orifices in a die with converging air flow sheets disposed along opposing sides of the series of orifices is an inefficient configuration for meltblowing processes that require substantial amounts of compressed air, which is costly. More specifically, a substantial portion of each air sheet contributes very little to the meltblowing process since only those portions of the air sheet proximate the opposing flanking sides of the individual fluid flows has any significant affect on the drawing and attenuation of the dispensed fluid. Also, only the shear component of the converging air flow sheets, which is parallel to the dispensed fluid flow direction, contributes to the drawing and attenuation of the dispensed fluid. The compressive component of the converging air flow sheets, which flows perpendicular to the dispensed fluid flow direction, does not contribute to the drawing and attenuation of the dispensed fluid. The inventors recognize further that maximizing the shear component of the air flow will maximize the rate at which the meltblown material is drawn and attenuated and reduce the required amounts of compressed air, which results in reduced production costs.

The inventors of the present invention recognize that any residual fluid along a fluid supply conduit between an actuatable fluid supply control valve and a fluid dispensing orifice has a tendency to continue to flow from the fluid dispensing orifice after the fluid supply has been terminated. In applications that require accurate dispensing of a meltblown fluid including the application of meltblown adhesives onto substrates, however, any continued fluid flow from the fluid orifice after the fluid supply is terminated is highly undesirable. The inventors recognize also that it is necessary in many meltblown adhesive applications, including the manufacture of bodily fluid absorbing hygienic articles, to uniformly produce and apply the meltblown filaments. More specifically, it is necessary to apply a consistent layer of meltblown material onto a substrate or other surface and to produce a well defined interface or boundary between areas covered and areas not covered by the meltblown material. In the production of bodily fluid absorbing hygienic articles, for example, accurate control over the application of meltblown adhesives onto specific areas of a substrate is absolutely necessary since only designated portions of the substrate require bonding whereas other areas either do not require bonding or are discarded as waste.

The inventors of the present invention recognize further that prior art manufacture and fabrication of meltblowing dies limits the scope of meltblowing applications for which the dies may be used. More specifically, many meltblowing dies require precision machining techniques to fabricate the often very small diameter fluid dispensing orifices and other features of the die. For some applications the die fabrication requirements are at the limits of existing technologies, and in many other applications the die fabrication requirements are cost prohibitive.

In view of the discussion above among other considerations, there exists a demonstrated need for an advancement in the art of meltblown processes and apparatus for practicing meltblowing processes.

It is therefore an object of the invention to provide novel meltblowing methods and novel apparatus for practicing meltblowing methods that overcome problems in the prior art.

According to a first aspect of this invention, a meltblowing apparatus includes a first fluid orifice in a body member;
two second fluid orifices in the body member flanking the first fluid orifice on substantially opposing sides thereof,
the first fluid orifice protruding relative to the two second fluid orifices,
the first and second fluid orifices each having a corresponding fluid conduit disposed in the body member, and
wherein a filament emanates from the first fluid orifice,
characterised in that means are provided to cause the filament to vacillate substantially in a plane between the two second fluid orifices on substantially opposing sides of the first fluid orifice.

According to a further aspect of this invention, a meltblowing method includes forming a filament by drawing a first fluid flow with two separate second fluid flows directed along substantially opposing sides of the first fluid flow;
characterised in that the filament is vacillated substantially in a plane between the two second fluid flows along substantially opposing sides thereof.

Particular embodiments of a method and apparatus in accordance with this invention will now be described with reference to the accompanying drawings; in which:-
FIG.1 is a diagrammatic view of an exemplary meltblowing process according to one aspect of the present invention;
FIG.2a is a partial sectional view of a meltblowing die for practising meltblowing processes according to several other aspects of the present invention;
FIG.2b is a perspective view of a meltblowing die having a plurality of arrays of fluid dispensing orifices arranged in configurations according to several exemplary embodiments of the invention, wherein each array includes a first orifice flanked on both substantially opposing sides by a second orifice;
FIGS.3a to 3t and 3z represent individual plates of a die assembly or body member according to an exemplary embodiment of the invention;
FIGS.4a-4f represent a partially exploded view of an exemplary die assembly or body member comprising several individual plates of FIGS.3;
FIG.5 is a perspective view of an exemplary partially assembled die assembly comprising several individual plates of FIG.3;
FIG.6 is a partial perspective view of a portion of an exemplary die assembly comprising several individual plates of FIG.3; and,
FIG.7 represents a partial perspective view of an exemplary die adapter assembly for coupling with the exemplary die assemblies of FIGS.3-5.

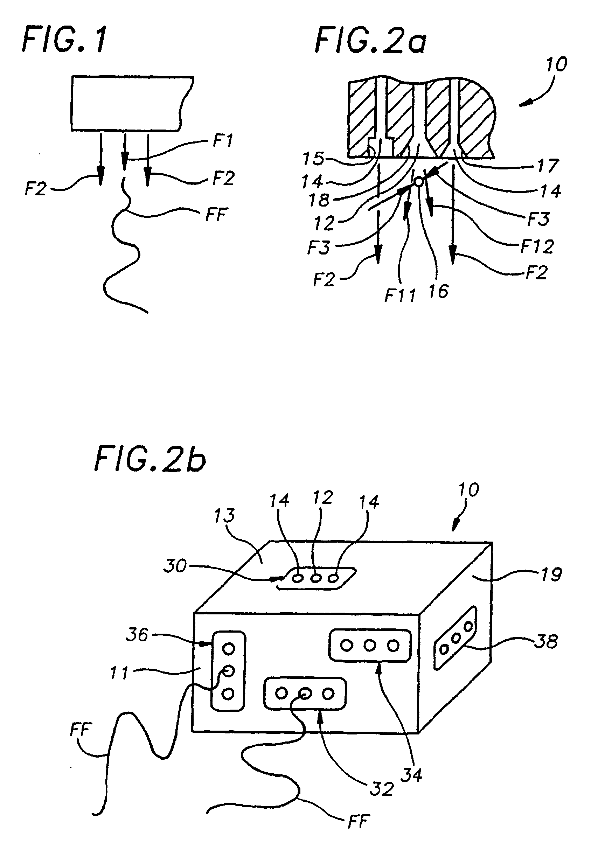

FIG. 1 is a diagrammatic view of a meltblowing process or method wherein a first fluid is dispensed to form a fluid flow F1 at a first velocity and a second fluid is dispensed to form separate second fluid flows F2 at a second velocity along substantially opposing flanking sides of the first fluid flow F1. According to this configuration, the first fluid flow F1 is located between the separate second fluid flows F2, wherein the substantially opposing sides of the first fluid flow F1 are each flanked by the second fluid flows F2 to form an array of fluid flows as shown in FIG. 1. The second velocity of the second fluid flows F2 is greater than the first velocity of the first fluid flow F1 so that the second fluid flows F2 draw and attenuate the first fluid flow F1 to form a first fluid filament FF. The length of the arrows F1 and F2 is indicative of, though not proportional to, the relative velocities therebetween. The first fluid flow F1 and the second fluid flows F2 are directed generally non-convergently. FIG. 1 shows the first fluid flow F1 and flanking second fluid flows F2 directed in parallel, which maximizes the drawing effect of the shear component of the second fluid flows F2 on the first fluid flow F1. In other embodiments, however, it may be advantageous to divergently direct the first fluid flow F1 and the second fluid flows F2 to control application or dispensing of the fluid filament FF without substantially adversely affecting the shear component of the second fluid flows F2 available for drawing the first fluid flow F1.

The method may be practiced, more generally, by dispensing the first fluid to form a plurality of first fluid flows F1 at the first velocity and dispensing the second fluid to form a plurality of second fluid flows F2 at the second velocity, wherein the plurality of first fluid flows F1 and the plurality of second fluid flows F2 are arranged in an alternating series so that each of the plurality of first fluid flows F1 is flanked on substantially opposing sides by one of the plurality of second fluid flows F2. According to this configuration, each of the plurality of first fluid flows F1 in the alternating series has one of the plurality of second fluid flows F2 on substantially opposing sides of the first fluid flow F1. The second velocity of the plurality of second fluid flows F2 is greater than the first velocity of the plurality of first fluid flows F1 so that the plurality of second fluid flows F2 draws and attenuates the plurality of first fluid flows F1 to form a plurality of first fluid filaments FF. The plurality of first fluid flows F1 and the plurality of second fluid flows F2 along the substantially opposing flanking sides of the first fluid flows F1 are directed generally non-convergently as discussed above. According to this mode of practicing the invention, the arrangement of the plurality of first and second fluid flows in an alternating series utilizes relatively effectively the shear component of the plurality of second fluid flows F2 for drawing and attenuating the plurality of first fluid flows F1 to form the plurality of first fluid filaments.

FIG. 1 shows the first fluid flow F1 including the first fluid filament FF vacillating under the effect of the flanking second fluid flows F2, which vacillation is attributable generally to instability of the fluid flows. The first fluid flow vacillation is characterizeable generally by an amplitude parameter and a frequency parameter, which are variable. The vacillation may be controlled, for example, by varying a spacing between the first fluid flow F1 and one or more of the flanking second fluid flows F2, or by varying an amount of one or more of the second fluid flows F2, or by varying a velocity of one or more of the second fluid flows F2. The frequency parameter of the vacillation is controlled generally by varying a velocity of the second fluid flows F2 relative to the velocity of the first fluid flow F1. The amplitude of the vacillation is controlled generally by varying a spacing between the first fluid flow F1 and the second fluid flows F2, or by varying the flow volummes or quantity of the second fluid flows F2. The symmetry of the vacillation is controlled generally by varying one of the second fluid flows F2 relative to the other of the second fluid flows F2. Control over vacillation symmetry is an effective means for controlling the edge profile or edge definition of the first fluid filament in some applications as further discussed below. These methods for controlling vacillation parameters of the first fluid flow F1 are also applicable to controlling vacillation parameters of a plurality of first fluid flows and the corresponding plurality of first fluid filaments.

FIG. 2a is a partial sectional view of an exemplary meltblowing die or body member 10 for practicing processes according to the present invention. Generally, the first fluid is dispensed from a first orifice 12 of the body member to form the first fluid flow F1, and the second fluid is dispensed from second orifices 14 to form separate second fluid flows F2 flanking substantially opposing sides of the first fluid flow F1 to form an orifice array 30, one of which is referenced in FIG. 2b. More generally, the body member 10 may include a plurality of first orifices 12 each flanked on substantially opposing sides by one of a plurality of second orifices 14 to form the alternating series of first and second fluid flows discussed above. And still more generally, the body member 10 may include a plurality of at least two arrays of orifices each formed by a first orifice and second orifices on substantially opposing sides of the first orifice. FIG. 2b, for example, shows a body member 10 having plurality of at least two orifice arrays 30 in a several exemplary configurations. According to one configuration, a common surface 11 of the body member 10 includes a first orifice array 32 and a second orifice array 34 arranged in parallel, though not necessarily collinear, to provide staggered first fluid filaments FF that vacillate in substantially parallel planes, only one of which is shown for clarity. In a more particular configuration, the fluid filaments FF produced by the staggered orifice arrays 32 and 34 may be controlled to overlap slightly. In another configuration, one orifice array 36 is oriented at an angle relative to one of the other orifice arrays 32 or 34 to provide first fluid filaments FF that vacillate in intersecting planes as shown. And in another configuration, one or more orifice arrays 30 and 38 are located on other surfaces 13 and 19 of the body member 10 relative to other orifice arrays 32, 34, and 36 to provide a three dimensional fluid filament distribution. These exemplary basic configurations may also be combined to produce still other configurations.

FIG. 2a shows one of the second orifices recessed in an aperture 15 of the body member 10 relative to the first orifice 12. According to this configuration, the recessed second orifice 14 prevents upward migration of first fluid flow from the first orifice 12 into the second orifice 14 to prevent obstruction thereof. In one embodiment, both of the plurality of second orifices 14 on each substantially opposing side of the first orifice 12 is recessed relative to the first orifice 12. FIG. 2a also shows the aperture 15 having an increasing taper extending away from the second orifice 14, which forms a tapered aperture 17. According to this alternative configuration, the tapered aperture 17 prevents upward migration of first fluid flow F1 from the first orifice 12 into the second orifice 14, as discussed above. The tapered aperture 17 also modifies the second fluid flow F2, for example, by broadening or increasing the cross sectional area of the second fluid flow F2. In another embodiment, both of the plurality of recesses 15 on substantially opposing sides of the first orifice 12 has an increasing taper to form a tapered aperture 17 as discussed above. Generally, the first and second orifices 12 and 14 of the body member 10 may have any cross sectional shape including circular, rectangular and generally polygonal shapes.

In one mode of practicing the invention shown in FIG. 2a, a high pressure zone 16 is generated proximate an output of the first orifice 12 with converging separate third fluid flows F3 to block residual first fluid flow from the first orifice 12 after a first fluid supply has been terminated. According to this aspect of the invention, the converging third fluid flows F3 are convergently directed from either the same side or from opposing sides of the series of first and second fluid flows F1 and F2 so that the converging third fluid flows F3 meet to form the high pressure zone 16 proximate the output of the first orifice 12. Alternatively, the high pressure zone 16 may be formed by deflecting or otherwise converging the second fluid flows F2, wherein the deflected second fluid flows F2 form the converging third fluid flows F3. In the preferred configuration, the converging third fluid flows F3 that form the high pressure zone 16 proximate the output of the first orifice 12 do not have a component of third fluid flow F3 in the direction of the first fluid flow F1 to ensure that residual first fluid flow is blocked. This process of converging third fluid flows F3 to form high pressure zones 16 proximate the first orifice 12 for blocking residual first fluid flow after the first fluid supply has been terminated is also applicable to blocking residual first fluid flow from each of a plurality of first orifices, wherein a corresponding high pressure zone 16 is generated proximate an output of each of the plurality of first orifices.

In another mode of practicing the invention shown in FIG. 2a, separate first fluid flows F11 and F12 are formed from the first orifice 12 by dispensing the first fluid through an increasing aperture 18 of the first orifice 12 and drawing the first fluid flow with the separate second fluid flows F2 at a second velocity greater than the first velocity of the first fluid flow, wherein the separate first fluid flows F11 and F12 form corresponding separate first fluid filaments. According to this aspect of the invention, the flanking second fluid flows F2 create corresponding low pressure zones on substantially opposing sides of the first fluid flow which tend to separate the first fluid flow emanating from the increasing aperture 18 of the first orifice 12. This process is also applicable to forming separate first fluid flows from one or more of a plurality of first orifices of a body member wherein a corresponding one or more of the first orifices 12 has an increasing aperture 18 as discussed above.

Another mode of forming separate first fluid flows F11 and F12 from the first orifice 12 includes generating a high pressure zone 16 proximate an output of the first orifice 12 with converging fourth fluid flows and drawing the first fluid flows F11 and F12 with the separate second fluid flows F2 at a second velocity greater than the first velocity of the first fluid flow, wherein the separate first fluid flows F11 and F12 form corresponding separate first fluid filaments. According to this aspect of the invention, the fourth fluid flows may be convergently directed from opposing sides of the series formed by the first and second fluid flows, or the array, so that the converging fourth fluid flows meet to form the high pressure zone 16 as discussed above. The first orifice 12 does not require an increasing aperture 18 for practicing this alternative aspect of the invention, which is also applicable to forming separate first fluid flows from each of a plurality of first orifices of a body member wherein a corresponding high pressure zone 16 is generated proximate an output of each of the plurality of first orifices.

According to another aspect of the invention, first fluid is dispensed from the plurality of first orifices to form the plurality of first fluid flows at substantially the same mass flow rate, and second fluid is dispensed from the plurality of second orifices to form the plurality of second fluid flows at substantially the same mass flow rate. According to a related aspect of the invention, the mass flow rates of one or more of the plurality of first fluid flows is controllable by varying either or both the size of the corresponding first orifice 12 and the fluid pressure across the corresponding first orifice 12, wherein the corresponding one or more first fluid flows have different mass flow rates. The mass flow rates of one or more of the plurality of second fluid flows is similarly controllable. And according to a related aspect of the invention, the meltblowing die or body member having a plurality of arrays or a plurality of first orifices and a plurality of second orifices arranged in an alternating series, as discussed above, also includes a first means for substantially uniformly distributing first fluid supplied to one or more of the plurality of first orifices 12 to form the plurality of first fluid flows F1 at the first velocity and at substantially the same mass flow rate, and a second means for substantially uniformly distributing second fluid supplied to one or more of the plurality of second orifices 14 to form the plurality of second fluid flows F2 at the second velocity and at substantially the same mass flow rate. According to this aspect of the invention, the dispensing of the plurality first fluid filaments formed by drawing and attenuating the plurality of first fluid flows from the plurality of first orifices of the die assembly may be controlled by controlling the distribution of first fluid to the plurality of first orifices 12.

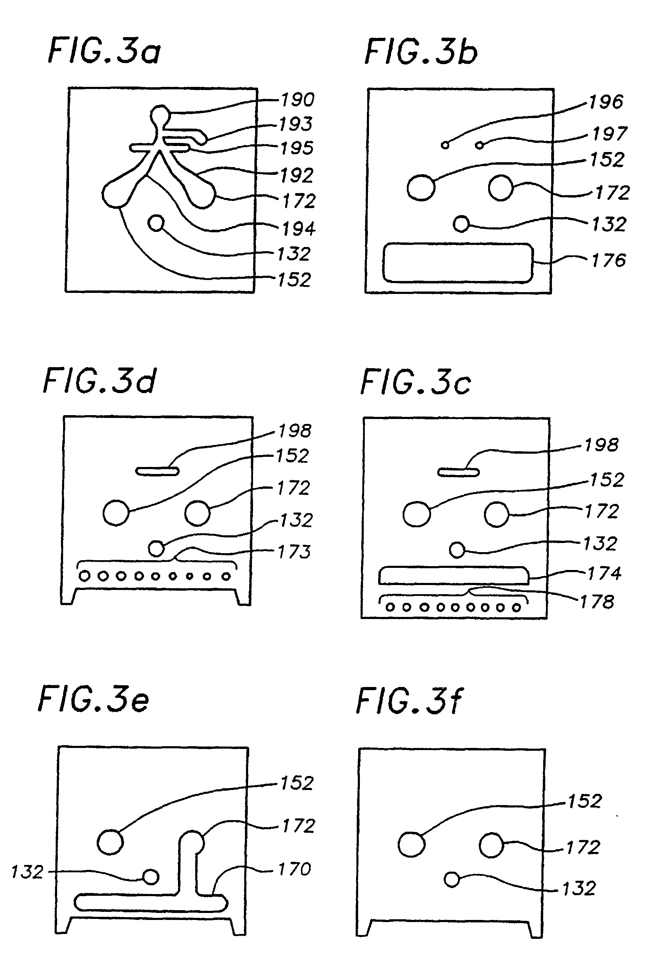

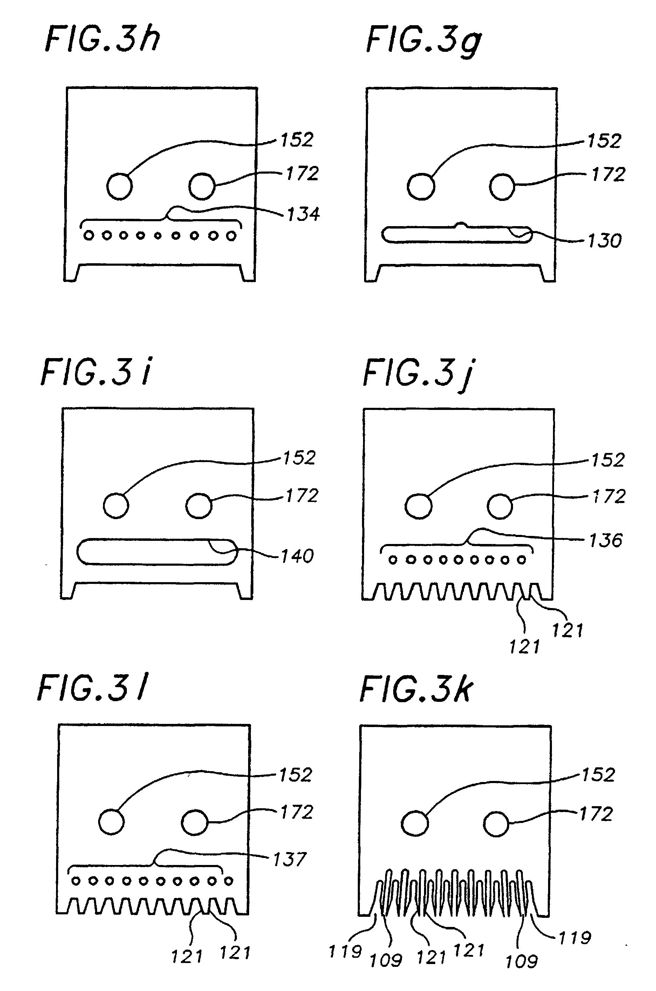

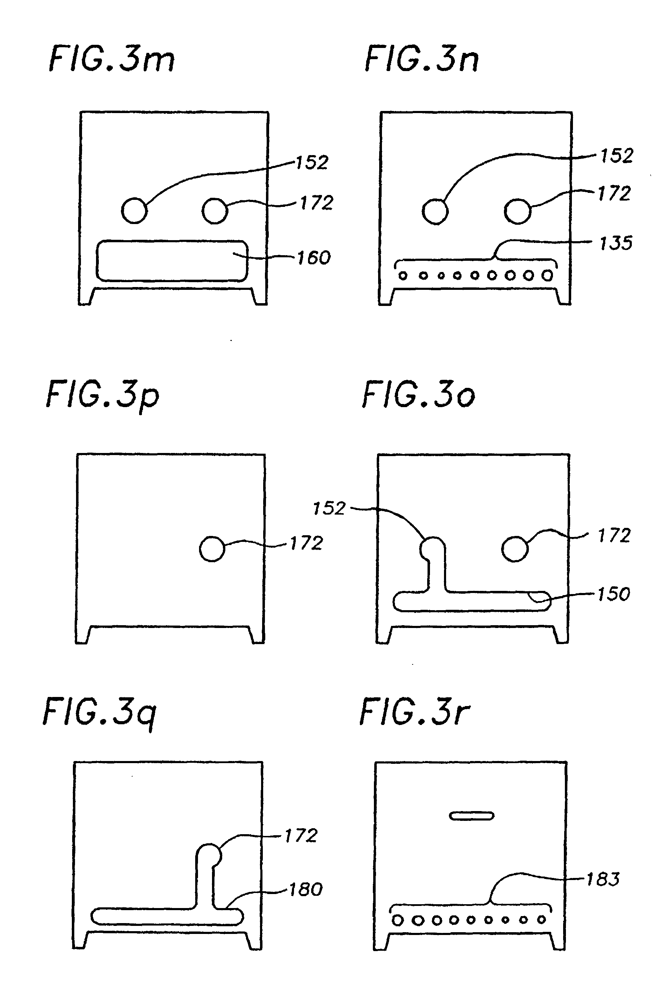

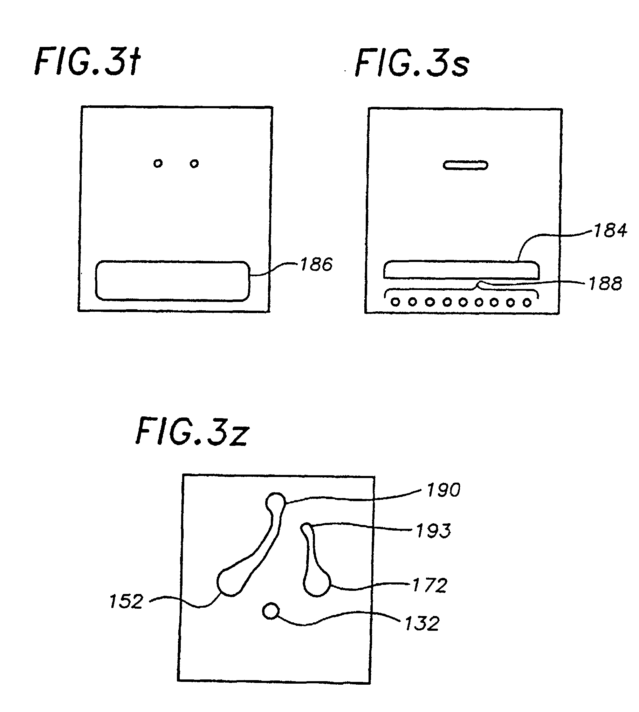

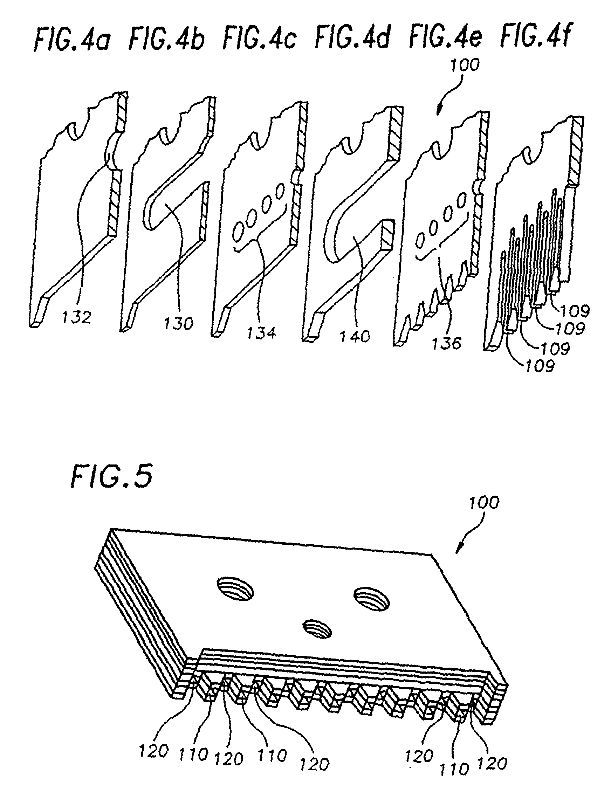

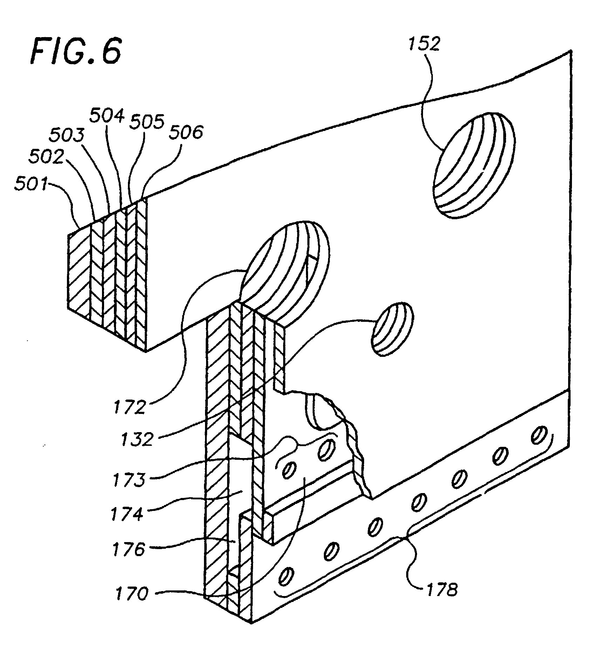

In FIGS. 3a-3t, 3z, 4a-4f and 5, the exemplary die assembly 100 comprises a plurality of laminated members or plates. The plates of FIGS. 3 a-3t are assembled one on top of the other beginning with the plate in FIG. 3a and ending with plate 3t. The plates of FIGS. 3f-3k correspond to the plates in FIGS. 4a-4f, respectively, and the plates of FIGS. 3f-3l corresponds to the assembly of FIG. 5, which shows an alternating series of the plurality of first and second orifices 110 and 120 as discussed above. The first and second fluids supplied to the die assembly 100 are distributed to the plurality of first and second orifices 110 and 120 as follows. The first fluid is supplied from a first restrictor cavity inlet 132 in the plate of FIG. 3f, also shown in FIG. 4a, to a first restrictor cavity 130 in the plate of FIG. 3g, also shown in FIG. 4b, through a plurality of passages 134 in the plate of FIG. 3h, also shown in FIG. 4c, and into first accumulator cavity 140 in the plate of FIG. 3i, also shown in FIG. 4d, where the first fluid is accumulated. The first fluid is then supplied from the accumulator cavity 140 through a plurality of passages 136 in the plate of FIG. 3j, also shown in FIG. 4e, to a plurality of first slots 109 in the plate of FIG. 3k, also shown in FIG. 4f. The plurality of first slots 109 form the plurality of first orifices 110 shown in FIG. 5 when the plate of FIG. 3k is disposed between the plate of FIG. 3j and the plate of FIG. 31. The second fluid is supplied from a second restrictor cavity inlet 152 in the plates of FIGS. 3f-3o to a second restrictor cavity 150 in the plate of FIG. 3o, through a plurality of passages 135 in the plate of FIG. 3n, and into a second accumulator cavity 160 in the plate of FIG. 3m where the second fluid is accumulated. The second fluid accumulated in the accumulator cavity 160 is then supplied through a plurality of passages 137 in the plate of FIG. 31 to a plurality of second slots 119 in the plate of FIG. 3k.

According to another aspect of the invention, the first fluid mass flow rate through each of the passages 134 is controlled by varying a size of the passages 134. In the exemplary embodiment of FIGS. 3a-3t, the first fluid supplied from the first restrictor cavity 130 is substantially uniformly distributed and supplied to the first accumulator cavity 140 by the plurality passages 134 having varying sizes to compensate for decreasing pressure along portions of the first restrictor cavity outlet and to provide substantially the same first fluid mass flow rate through each of the passages 134. The substantially uniformly distributed first fluid is accumulated in the first accumulator cavity 140 and supplied through a plurality of passages 136 at the first accumulator cavity outlet to the plurality of first orifices 110. And the plurality of first orifices 110, which are substantially the same size, dispense the uniformly distributed first fluid to form the plurality of first fluid flows at the first velocity and at substantially the same mass flow rate. Similarly, the second fluid supplied from the second restrictor cavity 150 is substantially uniformly distributed and supplied to the second accumulator cavity 160 by the plurality of passages 135 having varying sizes to compensate for decreasing pressure along portions of the second restrictor cavity outlet and to provide substantially the same second fluid mass flow rate through each of the passages 135. The substantially uniformly distributed second fluid is accumulated in the second accumulator cavity 160 and supplied through a plurality of passages 137 at the second accumulator cavity outlet to the plurality of second orifices 120. And the plurality of second orifices 120, which are substantially the same size, dispense the uniformly distributed second fluid to form the plurality of second fluid flows at the second velocity and at substantially the same mass flow rate.

In alternative embodiments, however, the fluid mass flow rates through any one or more of the orifices 110 and 120 may be selectively varied by varying a size of the corresponding orifices. And in an alternative or cumulative configuration, the fluid mass flow rate through any one or more of the first and second orifices 110 and 120 may be selectively varied by varying a pressure across the corresponding orifices. The pressure across an orifice may be decreased, for example, by forming an additional cavity, which causes a fluid pressure drop, along the fluid flow path to the selected orifice. If the die assembly is fabricated from a plurality of individual plates as discussed above, the additional cavity or cavities may be formed readily in one of the existing plates or in an additional plate.

FIG. 5 shows the plurality of second slots 119, which form the plurality of second orifices 120, disposed in a recess with a tapered aperture 121 relative to the plurality of first slots 109, which form the plurality of first orifices 110. As discussed above, this configuration reduces the tendency of the first fluid flows to migrate from the plurality of first orifices 110 back upward and into the plurality of second orifices 120 and also modifies the plurality of second fluid flows. To obtain this configuration, the plates of FIGS. 3j-31 have corresponding tapered slots 121 to provide the tapered aperture when the plates of FIGS. 3j-31 are assembled. In alternative embodiments, however, the plates of FIGS. 3j-31 may have slot configurations to provide any combination of the first and second orifice configurations discussed above with respect to FIG. 2a.

According to another aspect of the invention, the die assembly 100 includes a third means for generating a high pressure zone proximate an output of each of the plurality of first orifices 110 with converging third fluid flows, wherein the high pressure zone blocks residual fluid flow from the corresponding first orifice after terminating a supply of first fluid to the first orifice as discussed above. And according to a related aspect of the invention, the plurality of second fluid flows are diverted to form the high pressure zones as discussed below.

In the exemplary embodiments of FIGS. 3a-3t and 6, the die assembly 100 comprises a plurality of laminated members or plates, wherein the plates of FIGS. 3b-3f correspond to plates 502-506 in the partial die assembly of FIG. 6, respectively. According to this exemplary configuration, the third fluid is supplied from a third fluid inlet 172 extending through the plates of FIGS. 3b-3e into a first distribution cavity 170 in the plate of FIG. 3e, through a plurality of orifices 173 in the plate of FIG. 3d, into a cavity 174 in the plate of FIG. 3c, and into a cavity 176 in the plate of FIG. 3b. The fourth fluid is then supplied from the cavity 176 through a first plurality of orifices 178 in the plate of FIG. 3c, which orifices 178 form a first component of the converging third fluid flows. The third fluid also is supplied from the third fluid inlet 172 which continues to extend through the plates of FIGS. 3e-3q into a second distribution cavity 180 in the plate of FIG. 3q, into a plurality of orifices 183 in the plate of FIG. 3r, into a cavity 184 in the plate of FIG. 3s, and into a cavity 186 in the plate of FIG. 3t. The fourth fluid is then supplied from the cavity 186 through a second plurality of orifices 188 in the plate of FIG. 3s, which orifices 188 form a second component of the converging third fluid flows. The plurality of orifices 173 and 183 have various sizes, which compensate for pressure variations in the cavities 170 and 180 and uniformly distribute and supply the third fluid flow to the cavities 174 and 184, respectively. According to this configuration, the converging third fluid flows are dispensed from the respective orifices 178 and 188 at substantially the same mass flow rate. The third fluid mass flow rate through any one or more of the orifices 178 and 188, however, may be selectively varied as discussed above.

According to the exemplary embodiment, the first component of the converging third fluid flows emanates from the first plurality of orifices 178 and the second component of converging third fluid flows emanates from the second plurality of orifices 188 converge to form a high pressure zone proximate an output of each of the plurality of first orifices 110. The converging third fluid flows in this exemplary embodiment do not have a flow component in the flow direction of the first fluid flows, wherein the plurality of high pressure zones are useable to stem or block the flow of residual fluid from the plurality of first fluid orifices after terminating a first fluid supply to the first fluid inlet 132. In another application, the converging third fluid flows are useable to form separate first fluid flows as discussed above.

The exemplary embodiments of the die assembly 100 may be formed of a plurality of plates of substantially the same thickness, or alternatively, may be formed of a plurality of plates having different plate thicknesses, wherein each plate thickness is determined by the size of the conduits or cavities defined thereby as shown in FIGS. 3-5. The plates may be formed from metals, plastics, and ceramics among other materials, and the plates may be fabricated by stamping, punching, chemical etching, machining, and laser cutting among other processes, which are relatively cost effective alternatives to the prior art. Further, a die assembly 100 comprising a plurality of plates, as shown in the exemplary embodiments, provides considerable design flexibility in the configuration of the arrays or orifices, and the fluid flow and the distribution paths, which design and fabrication are not limited by the constraints imposed by prior art drilling processes. The plates of the present die assembly, for example, may be readily fabricated to produce die assemblies having configurations based on one or more of the exemplary configurations of FIG. 2b.

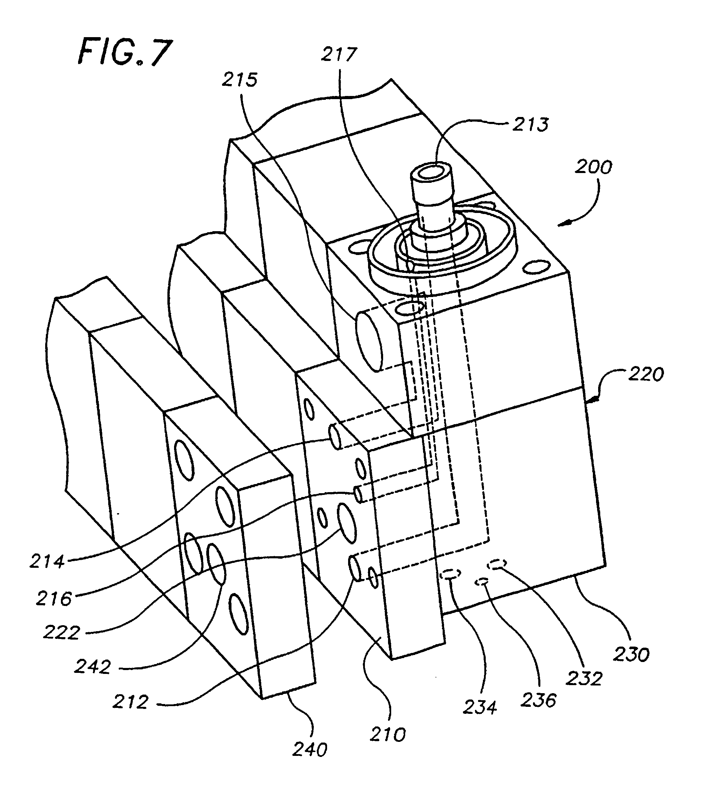

According to another aspect of the invention, the first and second fluids are supplied to the corresponding first and second fluid inlets 132 and 152 on a common fluid interface of the die assembly 100. FIG. 7 is an exemplary die adapter assembly 200 for mounting the die assembly 100 and for supplying fluids thereto. The die adapter assembly 200 includes a die assembly mounting interface 210 having a first fluid outlet port 212, a second fluid outlet port 214, and a control or third fluid outlet port 216, which are each coupled by corresponding conduits to corresponding fluid inlets ports 213, 215, and 217 on a body portion 220 of the adapter 200. In another embodiment, the die adapter assembly 200 includes a second interface 230 with a first fluid outlet port 232, a second fluid outlet port 234, and a control or third fluid outlet port 236, which are also coupled by corresponding conduit extensions, not shown, to corresponding fluid inlets ports 213, 215, and 217 on the body portion 220 of the adapter 200. The second mounting interface 230 is oriented at an angle relative to the first mounting interface 210, which in the exemplary embodiment is a 90 degree angle.

The die assembly 100 is coupled to the adapter 200 by mounting the die assembly 100 on the mounting interface 210 or 230. A sealing member like an o-ring, not shown, is disposed in a seat about each of the fluid outlets of the mounting interface 210 and 230 to provide a seal between the die assembly 100 and the adapter 200. The die assembly 100 and mounting interfaces 210 and 230 may also include mating alignment tabs to facilitate alignment and mounting of the die assembly 100 on the adapter 200. In one configuration, the die assembly 100 is mounted between the adapter interface 210 and a corresponding retaining plate 240, which retains the die assembly 100 mounted on the interface. A threaded bolt, not shown, is disposed through a central bore 232 of the retaining plate 230, and through a central bore of the die assembly 100, and into a threaded bore 222 of the body portion 220 of the adapter assembly 200, which permits ready installation and removal of the die assembly 100 relative to the adapter assembly 200. A similar retaining plate, not shown, is mounted on the unused mounting interface to seal the fluid outlet ports thereon. In another configuration, not shown, a second die assembly 100 is mounted on the second mounting interface so that the adapter 200 supplies fluids simultaneously to two die assemblies.

FIG. 3a is a die assembly fluid switching interface plate for diverting a single fluid flow to form either the second fluid flow or the third fluid flow as discussed above. The fluid flow switching plate includes a first fluid inlet 132, a switched fluid inlet 190, a primary fluid flow path 192 which couples the fluid inlet 190 with the third fluid inlet 172, and a secondary fluid flow path 194 which couples the fluid inlet 190 with the second fluid inlet 152. The primary fluid flow path 192 is a path of least resistance resulting from an asymmetry between the primary path 192 and the secondary path 194 so that fluid supplied to the fluid inlet 190 has a tendency to follow the curved primary fluid flow path 192 toward the third fluid inlet 172. The fluid from the fluid inlet 190 is diverted from the primary path 192 to the secondary path 194 by introducing an obstruction along the primary path 192, which causes the fluid to flow along the secondary path 194 toward the second fluid inlet 152. In the exemplary embodiment, the obstruction is a control air flow introduced from a control fluid inlet 193, which urges the switched fluid toward the secondary fluid flow path 194. The plate of FIG. 3a also includes a slot 195 with opposing end portions coupled by corresponding ports 196 and 197 in the plate of FIG. 3b to a recess 198 formed in the adjacent plates of FIGS. 3c and 3d for fluid pressure balancing. According to this configuration, the first fluid outlet 212, the second fluid outlet 214, and the control fluid outlet 216 of the die assembly adapter 200 are coupled, respectively, to the first fluid inlet 132, the switched fluid inlet 190, and the control fluid inlet 193 of the switching plate of FIG. 3a to supply fluid to the die assembly 100.

In one application, the die assembly adapter 200 is coupled to an MR-1300 nozzle module available from ITW Dynatec, Hendersonville, Tennessee, USA which includes a pneumatically actuatable valve for controlling the supply of first fluid to the first fluid inlet 213 of the die assembly adapter 200. The control air inlet 215 of the adapter 200 is coupled to the MR-1300 valve actuation air supply to supply control air to the control fluid inlet 193 of the die assembly 100, which directs fluid from the switched fluid inlet 190 to the fluid inlet 152 of the die assembly when the MR-1300 valve is opened to supply first fluid to the first fluid inlet 132 of the die assembly 100. According to this configuration, the first fluid and the second fluid supplied to the die assembly 100 are dispensed from the first and second orifices 110 and 120 as discussed above. And when the MR-1300 valve is closed to terminate the first fluid supply, control air to the control fluid inlet 193 of the die assembly 100 is terminated, wherein fluid from the switched fluid inlet 190 is directed to the fluid inlet 172 to form the converging air flows, which block first fluid from the first orifices as discussed above.

FIG. 3z is a die assembly fluid interface plate useable as an alternative to the die assembly fluid switching interface plate in FIG 3a, wherein the fluid inlet 190 of the die assembly 100 is coupled directly to the second fluid inlet 152, and the fluid inlet 193 of the die assembly 100 is coupled directly to the third fluid inlet 172. According to this configuration, the control air inlet 215 of the adapter 200 is coupled to the MR-1300 valve actuation air supply to supply a control air to the fluid inlet 193 of the die assembly 100 when the MR-1300 valve is closed to terminate first fluid to the first fluid inlet 132 of the die assembly 100. This dedicated configuration provides more responsive residual first fluid flow blocking since there is no switching delay required to form the converging third fluid flows. The converging third fluid flows of the die assembly thus form high pressure zones in the presence of, but are unaffected by, the second fluid flows, which draw and attenuate the first fluid flows. In yet another configuration, the fluid supplied to the fluid inlet 193 is unrelated to the MR-1300 valve actuation air supply tc provide still more control over the respective fluid flows.

According to another exemplary application, the meltblowing method and apparatus disclosed herein dispense meltblown adhesives onto substrates in manufacturing processes including the production of bodily fluid absorbing hygienic articles. According to a configuration for these applications, which is shown in FIG. 7, a plurality of at least two adjacent die assemblies 100 are disposed in corresponding die assembly adapters 200 arranged side by side to form a linear array of the plurality of corresponding adjacent first and second orifices 110 and 120 of each of the adjacent die assemblies 100. For meltblown adhesive dispensing applications, the first and second orifices of the die assembly have dimensions between approximately 0.001 and 0.030 inches (0.025 and 0.75 mm) on each side. These dimensions are not limiting however, and may be more or less for these and other applications. In one configuration, at least one of the endmost first orifices of the plurality of adjacent die assemblies has a modified first fluid flow vacillation to control the edge profile or edge definition of meltblown adhesive dispensed from the array of die assemblies according to the aspects and embodiments of the invention discussed above. In another configuration, the plurality of first orifices of the plurality of adjacent die assemblies are oriented to produce a slightly diverging pluralities of first fluid flows, which provide a uniform meltblown adhesive application onto the substrates. And in another configuration, at least one or more of the plurality of first fluid flows are at different mass flow rates according to one or more configurations discussed above. The plates of the die assembly 100 may be assembled by soldering, brazing, mechanical clamping, fusion under high temperture and pressure, and adhesive bonding among other means.

## Claims

1. A meltblowing apparatus including a first fluid orifice (12) in a body member (10);
two second fluid orifices (14) in the body member (10) flanking the first fluid orifice (12) on substantially opposing sides thereof,
the first fluid orifice (12) protruding relative to the two second fluid orifices (14),
the first (12) and second (14) fluid orifices each having a corresponding fluid conduit disposed in the body member (10), and
wherein a filament (FF) emanates from the first fluid orifice (12),
**characterised in that** means are provided to cause the filament (FF) to vacillate substantially in a plane between the two second fluid orifices (14) on substantially opposing sides of the first fluid orifice (12).

2. The apparatus of Claim 1, further comprising a plurality of first fluid orifices (12) in the body member (10) and a plurality of second fluid orifices (14) in the body member (10), each first fluid orifice (12) flanked on substantially opposing sides by two separate second fluid orifices (14), the plurality of first fluid orifices (12) and the plurality of second fluid orifices (14) each having corresponding fluid conduits disposed in the body member (10).

3. The apparatus of Claim 2, wherein a filament (FF) emanates from each one of the plurality of first fluid orifices (12), the plurality of filaments (FF) each vacillating substantially in a plane between the two second fluid orifices (14) on substantially opposing sides of the corresponding first fluid orifice (12).

4. The apparatus of Claims 3, wherein the plurality of first fluid orifices (12) and the plurality of second fluid orifices (14) are aligned in a series.

5. The apparatus of any one of Claims 1 to 3, wherein the conduits of the first (12) and second (14) fluid orifices are disposed non-convergently in the body member (10).

6. The apparatus of any one of Claims 1 to 3, wherein the conduits of the first (12) and second (14) fluid orifices are disposed in parallel in the body member (10).

7. The apparatus of Claims 1, 2, 5 or 6, wherein each first fluid orifice (12) has associated therewith not more than two second fluid orifices (14).

8. The apparatus of any one of Claims 1 to 3, further comprising a moving substrate with each first fluid orifice (12) and the two second fluid orifices (14) disposed on opposing sides thereof and aligned non-parallel to a direction of the moving substrate.

9. The apparatus of Claims 2, 3, 4 or 8, wherein the plurality of first fluid orifices (12) protrude relative to the plurality of second fluid orifices (14).

10. The apparatus of any one of Claims 1 to 9, wherein the body member (10) comprises a plurality of at least two plates (501-506).

11. The apparatus of Claim 10, wherein the body member (10) comprises a plurality of parallel plates (501-506).

12. A meltblowing method including forming a filament (FF) by drawing a first fluid flow (F1) with two separate second fluid flows (F2) directed along substantially opposing sides of the first fluid flow (F1);
**characterised in that** the filament (FF) is vacillated substantially in a plane between the two second fluid flows (F2) along substantially opposing sides thereof.

13. The method of Claim 12, further comprising forming a plurality of filaments (FF) by drawing a corresponding plurality of first fluid flows (F1) each with corresponding two separate second fluid flows (F2) directed along substantially opposing sides of the corresponding first fluid flow (F1), and
vacillating each of the plurality of filaments (FF) substantially in a plane between the corresponding two second fluid flows (F2) along substantially opposing sides thereof.

14. The method of Claim 12 or Claim 13, further comprising forming each first fluid flow (F1) with a first fluid dispensed from a corresponding first orifice (12) in a body member (10), forming each second fluid flow (F2) with a second fluid dispensed from a corresponding second orifice (14) in the body member (10), each first orifice (12) flanked on substantially opposing sides by two separate second fluid orifices (14), each first orifice (12) protruding relative to the corresponding two second orifices (14).

15. The method of Claim 12, 13 or 14, further comprising depositing each filament (FF) onto a substrate moving substantially non-parallel to the plane of vacillation thereof.

16. The method of Claim 13 or Claim 14, further comprising vacillating the plurality of filaments (FF) side by side in planes which are substantially non-parallel to a direction of a moving substrate and depositing the filaments (FF) onto the moving substrate.

17. The method of Claim 12, 13 or 14, further comprising directing the first (F1) and second (F2) fluid flows non-convergently.

18. The method of Claim 12, 13 or 14, further comprising directing the first (F1) and second (F2) fluid flows in parallel.

## Patentansprüche

1. Schmelzblasvorrichtung, beinhaltend eine erste Fluidöffnung (12) in einem Körperelement (10);
wobei zwei zweite Fluidöffnungen (14) in dem Körperelement (10) die erste Fluidöffnung (12) auf im wesentlichen entgegengesetzten Seiten davon flankieren,
wobei die erste Fluidöffnung (12) im Verhältnis zu den zwei zweiten Fluidöffnungen (14) hervorsteht,
wobei die erste (12) und die zweiten (14) Fluidöffnungen jeweils eine entsprechende Fluidleitung aufweisen, die in dem Körperelement (10) angeordnet ist, und
wobei ein Faden (FF) aus der ersten Fluidöffnung (12) ausströmt,
**dadurch gekennzeichnet, dass** Mittel vorgesehen sind, um den Faden (FF) im wesentlichen in einer Ebene zwischen den zwei zweiten Fluidöffnungen (14) auf im wesentlichen entgegengesetzte Seiten der ersten Fluidöffnung (12) hin und her zu bewegen.

2. Vorrichtung nach Anspruch 1, ferner umfassend eine Vielzahl von ersten Fluidöffnungen (12) in dem Körperelement (10) und eine Vielzahl von zweiten Fluidöffnungen (14) in dem Körperelement (10), wobei jede erste Fluidöffnung (12) auf im wesentlichen entgegengesetzten Seiten von zwei separaten zweiten Fluidöffnungen (14) flankiert ist, wobei die Vielzahl von ersten Fluidöffnungen (12) und die Vielzahl von zweiten Fluidöffnungen (14) jeweils entsprechende Fluidleitungen aufweisen, die in dem Körperelement (10) angeordnet sind.

3. Vorrichtung nach Anspruch 2, wobei ein Faden (FF) aus jeder der Vielzahl von ersten Fluidöffnungen (12) ausströmt, wobei sich die Vielzahl von Fäden (FF) jeweils im wesentlichen in einer Ebene zwischen den zwei zweiten Fluidöffnungen (14) auf im wesentlichen entgegengesetzte Seiten der entsprechenden ersten Fluidöffnung (12) hin und her bewegt.

4. Vorrichtung nach Anspruch 3, wobei die Vielzahl von ersten Fluidöffnungen (12) und die Vielzahl von zweiten Fluidöffnungen (14) in einer Reihe ausgerichtet sind.

5. Vorrichtung nach einem der Ansprüche 1 bis 3, wobei die Leitungen der ersten (12) und zweiten (14) Fluidöffnungen nicht konvergierend in dem Körperelement (10) angeordnet sind.

6. Vorrichtung nach einem der Ansprüche 1 bis 3, wobei die Leitungen der ersten (12) und zweiten (14) Fluidöffnungen parallel in dem Körperelement (10) angeordnet sind.

7. Vorrichtung nach einem der Ansprüche 1, 2, 5 oder 6, wobei jeder ersten Fluidöffnung (12) nicht mehr als zwei zweite Fluidöffnungen (14) zugeordnet sind.

8. Vorrichtung nach einem der Ansprüche 1 bis 3, ferner umfassend ein sich bewegendes Substrat mit jeder ersten Fluidöffnung (12) und den zwei zweiten Fluidöffnungen (14), die an entgegengesetzten Seiten davon angeordnet und nicht parallel zu einer Richtung des beweglichen Substrats ausgerichtet sind.

9. Vorrichtung nach einem der Ansprüche 2, 3, 4 oder 8, wobei die-Vielzahl von ersten Fluidöffnungen (12) im Verhältnis zu der Vielzahl von zweiten Fluidöffnungen (14) hervorstehen.

10. Vorrichtung nach einem der Ansprüche 1 bis 9, wobei das Körperelement (10) eine Vielzahl von zumindest zwei Blechen (501-506) umfasst.

11. Vorrichtung nach Anspruch 10, wobei das Körperelement (10) eine Vielzahl von parallelen Blechen (501-506) aufweist.

12. Schmelzblasverfahren, beinhaltend das Ausbilden eines Fadens (FF) durch Ziehen eines ersten Fluidstroms (F1) mit zwei separaten zweiten Fluidströmen (F2), die entlang im wesentlichen entgegengesetzter Seiten des ersten Fluidstroms (F1) geleitet werden;
**dadurch gekennzeichnet, dass** der Faden (FF) im wesentlichen in einer Ebene zwischen den zwei zweiten Fluidströmen (F2) entlang im wesentlichen entgegengesetzter Seiten davon hin und her bewegt wird.

13. Verfahren nach Anspruch 12, ferner umfassend das Ausbilden einer Vielzahl von Fäden (FF) durch Ziehen einer entsprechenden Vielzahl von ersten Fluidströmen (F1) jeweils mit entsprechenden zwei separaten zweiten Fluidströmen (F2), die entlang im wesentlichen entgegengesetzter Seiten des entsprechenden ersten Fluidstroms (F1) geleitet sind, und
das Hin- und Herbewegen jeder der Vielzahl von Fäden (FF) im wesentlichen in einer Ebene zwischen den entsprechenden zwei zweiten Fluidströmen (F2) entlang im wesentlichen entgegengesetzten Seiten davon.

14. Verfahren nach Anspruch 12 oder 13, ferner umfassend das Ausbilden jeden ersten Fluidstroms (F1) mit einem ersten Fluid, das aus einer entsprechenden ersten Fluidöffnung (12) in einem Körperelement (10) ausgegeben wird, das Ausbilden jeden zweiten Fluidstroms (F2) mit einem zweiten Fluid, das aus einer entsprechenden zweiten Fluidöffnung (14) in dem Körperelement (10) ausgegeben wird, wobei jede erste Fluidöffnung (12) auf im wesentlichen entgegengesetzten Seiten von zwei separaten zweiten Fluidöffnungen (14) flankiert ist, wobei jede erste Öffnung (12) im Verhältnis zu den entsprechenden zwei zweiten Öffnungen (14) hervorsteht.

15. Verfahren nach einem der Ansprüche 12, 13 oder 14, ferner umfassend das Abgeben jeden Fadens (FF) auf ein Substrat, das sich im wesentlichen nicht parallel zur Bewegungsebene des hin und her bewegten Fadens bewegt.

16. Verfahren nach Anspruch 13 oder 14, ferner umfassend das Hin- und Herbewegen der Vielzahl von Fäden (FF) von Seite zu Seite in Ebenen, die im wesentlichen nicht parallel zu einer Richtung eines sich bewegenden Substrats liegen, und das Ablagern der Fäden (FF) auf das bewegliche Substrat.

17. Verfahren nach einem der Ansprüche 12, 13 oder 14, ferner umfassend das Leiten der ersten (F1) und zweiten (F2) Fluidströme in nicht konvergierender Anordnung.

18. Verfahren nach einem der Ansprüche 12, 13 oder 14, ferner umfassend das Leiten der ersten (F1) und zweiten (F2) Fluidströme in paralleler Anordnung.

## Revendications

1. Appareil de fusion-soufflage ayant un premier orifice de fluide (12) dans un élément corps (10),
deux deuxièmes orifices de fluide (14) dans l'élément corps (10) qui flanquent le premier orifice de fluide (12) sur des côtés sensiblement opposés de celui-ci,
le premier orifice de fluide (12) faisant saillie par rapport aux deux deuxièmes orifices de fluide (14),
le premier orifice de fluide (12) et les deuxièmes orifices de fluide (14) ayant chacun un conduit de fluide correspondant situé dans l'élément corps (10), et
dans lequel un filament (FF) émane du premier orifice de fluide (12),
**caractérisé par le fait qu'**il est prévu des moyens destinés à faire vaciller le filament (FF) sensiblement dans un plan entre les deux deuxièmes orifices de fluide (14) sur des côtés sensiblement opposés du premier orifice de fluide (12).

2. Appareil selon la revendication 1, comprenant en outre un ensemble de premiers orifices de fluide (12) dans l'élément corps (10) et un ensemble de deuxièmes orifices de fluide (14) dans l'élément corps (10), chaque premier orifice de fluide (12) étant flanqué, sur des côtés sensiblement opposés, de deux deuxièmes orifices de fluide séparés (14), l'ensemble de premiers orifices de fluide (12) et l'ensemble de deuxièmes orifices de fluide (14) ayant chacun des conduits de fluide correspondants situés dans l'élément corps (10).

3. Appareil selon la revendication 2, dans lequel un filament (FF) émane de chacun de l'ensemble de premiers orifices de fluide (12), les filaments (FF) vacillant chacun sensiblement dans un plan entre les deux deuxièmes orifices de fluide (14) sur des côtés sensiblement opposés du premier orifice de fluide (12) correspondant.

4. Appareil selon la revendication 3, dans lequel l'ensemble de premiers orifices de fluide (12) et l'ensemble de deuxièmes orifices de fluide (14) sont alignés en une série.

5. Appareil selon l'une des revendications 1 à 3, dans lequel les conduits du premier orifice de fluide (12) et des deuxièmes orifices de fluide (14) sont disposés de manière non convergente dans l'élément corps (10).

6. Appareil selon l'une des revendications 1 à 3, dans lequel les conduits du premier orifice de fluide (12) et des deuxièmes orifices de fluide (14) sont disposés en parallèle dans l'élément corps (10).

7. Appareil selon l'une des revendications 1, 2, 5 et 6, dans lequel à chaque premier orifice de fluide (12) ne sont pas associés plus de deux deuxièmes orifices de fluide (14).

8. Appareil selon l'une des revendications 1 à 3, comprenant en outre un substrat mobile ayant chaque premier orifice de fluide (12) et les deux deuxièmes orifices de fluide (14) disposés sur des côtés opposés de celui-ci et alignés non parallèlement à une direction du substrat mobile.

9. Appareil selon l'une des revendications 2, 3, 4 et 8, dans lequel l'ensemble de premiers orifices de fluide (12) fait saillie par rapport à l'ensemble de deuxièmes orifices de fluide (14).

10. Appareil selon l'une des revendications 1 à 9, dans lequel l'élément corps (10) comprend un ensemble d'au moins deux plaques (501-506).

11. Appareil selon la revendication 10, dans lequel l'élément corps (10) comprend un ensemble de plaques parallèles (501-506).

12. Procédé de fusion-soufflage comprenant la formation d'un filament (FF) par étirage d'un premier courant de fluide (F1) par deux deuxièmes courants de fluide séparés (F2) dirigés le long de côtés sensiblement opposés du premier courant de fluide (F1),
**caractérisé par le fait qu'**on fait vaciller le filament (FF) sensiblement dans un plan entre les deux deuxièmes courants de fluide (F2) le long de côtés sensiblement opposés de celui-ci.

13. Procédé selon la revendication 12, comprenant en outre la formation d'un ensemble de filaments (FF) par étirage d'un ensemble correspondant de premiers courants de fluide (F1) chacun par deux deuxièmes courants de fluide séparés (F2) correspondants dirigés le long de côtés sensiblement opposés du premier courant de fluide (F1) correspondant, et
la production de vacillement de chacun des filaments (FF) sensiblement dans un plan entre les deux deuxièmes courants de fluide (F2) correspondants le long de côtés sensiblement opposés de celui-ci.

14. Procédé selon l'une des revendications 12 et 13, comprenant en outre la formation de chaque premier courant de fluide (F1) avec un premier fluide émis d'un premier orifice (12) correspondant situé dans un élément corps (10), la formation de chaque deuxième courant de fluide (F2) avec un deuxième fluide émis d'un deuxième orifice (14) correspondant situé dans l'élément corps (10), chaque premier orifice (12) étant flanqué, sur des côtés sensiblement opposés, de deux deuxièmes orifices de fluide séparés (14), et chaque premier orifice (12) faisant saillie par rapport aux deux deuxièmes orifices (14) correspondants.

15. Procédé selon l'une des revendications 12, 13 et 14, comprenant en outre le dépôt de chaque filament (FF) sur un substrat se déplaçant sensiblement non parallèlement au plan de vacillement de celui-ci.

16. Procédé selon l'une des revendications 13 et 14, comprenant en outre la production de vacillement de l'ensemble des filaments (FF) côte à côte dans des plans sensiblement non parallèles à une direction d'un substrat mobile, et le dépôt des filaments (FF) sur le substrat mobile.

17. Procédé selon l'une des revendications 12, 13 et 14, comprenant en outre le fait de diriger le premier courant de fluide (F1) et les deuxièmes courants de fluide (F2) de manière non convergente.

18. Procédé selon l'une des revendications 12, 13 et 14, comprenant en outre le fait de diriger le premier courant de fluide (F1) et les deuxièmes courants de fluide (F2) en parallèle.
